# FASCICULE DE BREVET EUROPEEN

(11) **EP 1 296 747 B1**
(45) Date de publication et mention de la délivrance du brevet: **05.12.2007**
(21) Numéro de dépôt: 01917057.0
(22) Date de dépôt: 01.03.2001
(51) Int. Cl.: B01D 3/38, C08F 6/00

(54) **PROCEDE ET INSTALLATION POUR EXTRAIRE UN MONOMERE D'UN BROUET AQUEUX CONTENANT UN POLYMERE**
VERFAHREN UND ANLAGE ZUM EXTRAHIEREN EINES MONOMEREN AUS EINER WÄSSRIGEN, EIN POLYMER ENTHALTENDEN BRÜHE
METHOD AND INSTALLATION FOR EXTRACTING A MONOMER FROM AN AQUEOUS SLURRY CONTAINING A POLYMER

(30) Priorité: 02.03.2000 FR 0002806
(43) Date de publication de la demande: 02.04.2003
(73) Titulaire: SOLVAY (Société Anonyme), 1050 Bruxelles (BE)
(72) Inventeur: TARANTI, Philippe, B-5190 Jemeppe-sur-Sambre (BE); GOLIN, Mario, B-5190 Jemeppe-sur-Sambre (BE)
(74) Mandataire: Jacques, Philippe
(86) Numéro de dépôt international: PCT/EP2001/002405
(87) Numéro de publication internationale: WO 2001/064308

(56) Documents cités:
- EP-A- 0 756 883
- GB-A- 1 506 983
- GB-A- 2 028 836
- US-A- 4 282 348

## Description

L'invention a pour objet un procédé pour extraire un monomère d'un brouet aqueux de polymère.

La polymérisation en suspension est une technique communément utilisée pour fabriquer du polychlorure de vinyle. Dans cette technique connue, on procède à la polymérisation d'un monomère vinylique (chlorure de vinyle) en présence d'un milieu aqueux, et on arrête la polymérisation avant que la totalité du chlorure de vinyle ait été polymérisée. En général, la polymérisation est arrêtée dès que 80 à 95 % de la quantité de monomère a été convertie en polymère. Il en résulte que le brouet aqueux de polychlorure de vinyle, que l'on recueille à l'issue de la polymérisation, contient une quantité non négligeable de monomère vinylique résiduel, qu'il convient d'éliminer.

Dans les documents EP 0 756 883 et US 4,282,348, on décrit une installation spécialement conçue pour le traitement de tels brouets de polychlorure de vinyle, en vue d'en éliminer le monomère vinylique résiduel qu'ils contiennent. Cette installation connue comprend une colonne verticale, divisée en une série de chambres superposées par des plateaux horizontaux perforés. Après avoir été préchauffé à une température de l'ordre de 50 à 100 °C, le brouet aqueux à épurer est introduit dans la colonne, où on le soumet à un balayage avec un courant ascendant de gaz inerte, pour extraire le monomère vinylique qu'il contient.

En pratique industrielle, ce procédé connu ne donne pas satisfaction. On observe en effet des perturbations dans l'écoulement du brouet dans la colonne, principalement dans le cas d'un débit élevé. Ces perturbations comprennent notamment des projections du brouet sur les parois de la colonne, à l'entrée de celle-ci. Elles nuisent au rendement de l'épuration du brouet et risquent d'endommager les plateaux et les autres pièces constitutives de la colonne. Un moyen de remédier à ces perturbations serait de travailler avec de faibles débits de brouet et de basses températures à l'entrée de la colonne, mais il en résulterait une perte de productivité.

L'invention vise à remédier à cet inconvénient de l'installation connue décrite plus haut et du procédé qui y est mis en oeuvre, en fournissant un procédé nouveau et une installation pour sa mise en oeuvre, qui suppriment le risque de projection de brouet à l'entrée de la colonne, sans nuire à la productivité de celle-ci.

En conséquence, l'invention concerne un procédé pour extraire un monomère d'un brouet aqueux d'un polymère, selon lequel on chauffe le brouet, puis on l'introduit dans une colonne où on le soumet à un balayage avec un courant ascendant de gaz inerte; selon l'invention, après avoir chauffé le brouet et avant de l'introduire dans la colonne, on le soumet à une détente.

Dans le procédé selon l'invention, le brouet aqueux du polymère contient le polymère à l'état de particules solides dispersées dans de l'eau. La quantité de polymère dans le brouet n'est pas critique. La viscosité du brouet ne doit toutefois pas excéder une valeur au-delà de laquelle le balayage avec le courant du gaz inerte deviendrait impossible. En pratique, la quantité de polymère dans le brouet va dépendre de la nature du polymère et doit être déterminée dans chaque cas pratique par un travail de routine au laboratoire. Par exemple, dans le cas d'un polymère vinylique obtenu par polymérisation en suspension, le brouet peut contenir de 15 à 60 % en poids de polymère.
Le monomère présent dans le brouet comprend, pour l'essentiel, du monomère dont dérive le polymère. Il est généralement du monomère résiduel, qui n'a pas participé à la polymérisation. La teneur du brouet en monomère va dès lors dépendre du taux de conversion du monomère en polymère. Par exemple, dans le cas d'un polymère et d'un monomère vinyliques, le taux de conversion du monomère en polymère est habituellement compris entre 80 et 95 %.
Le chauffage du brouet a pour fonction de permettre l'extraction ultérieure du monomère, dans un courant de gaz inerte. La température optimum pour le chauffage du brouet va dès lors dépendre du polymère traité et de la viscosité du brouet. Elle doit être déterminée dans chaque cas particulier. Dans le cas des polymères vinyliques, des températures recommandées se situent entre 50 et 120 °C, les températures de 80 à 110 °C étant spécialement avantageuses.

Dans la colonne, le courant de gaz inerte a pour fonction d'entraîner le monomère qui se trouve dans le brouet. On entend par gaz inerte un gaz qui est inerte chimiquement vis-à-vis du polymère, du monomère et de l'eau, dans les conditions de température et de pression régnant dans la colonne.

Conformément à l'invention, après avoir chauffé le brouet et avant de l'introduire dans la colonne, on le soumet à une détente.

On entend par détente, une baisse de la pression de la phase gazeuse qui se trouve en contact avec le brouet. Elle peut être effectuée par tout moyen technique adéquat, un moyen spécialement aisé consistant à introduire le brouet dans une chambre de grand volume.

L'inventeur a trouvé que sous l'effet du chauffage, une partie substantielle du monomère est vaporisée et forme au-dessus du brouet une phase gazeuse sous pression. La détente a dès lors pour fonction d'évacuer la phase gazeuse du brouet pour réduire sa pression jusqu'à une valeur voisine de (idéalement égale à) celle régnant dans la colonne, à l'endroit d'introduction du brouet. L'importance de la détente va dépendre du chauffage et du volume du brouet, ainsi que de la pression régnant dans la colonne, et elle doit être dès lors être déterminée dans chaque cas particulier.

L'invention concerne également une installation pour la mise en oeuvre du procédé selon l'invention, cette installation comprenant, de manière connue en soi, une colonne verticale, divisée en plusieurs chambres superposées par des plateaux perforés, un dispositif d'admission du brouet dans au moins l'une des chambres, au-dessus d'un plateau perforé et une conduite d'admission d'un gaz inerte dans le fond de la colonne. Conformément à l'invention, le dispositif d'admission du brouet dans la colonne comprend une chambre de détente, en amont de la colonne.

Dans l'installation selon l'invention, la colonne est conçue pour réaliser une circulation du brouet du haut vers le bas dans la colonne, à contre sens d'un courant ascendant de gaz inerte. A cet effet, le gaz inerte circule verticalement à travers les perforations des plateaux et traverse un film de brouet que circule sur ceux-ci avant de tomber dans la chambre située sous le plateau. Un exemple de colonne qui est spécialement adaptée à l'invention se trouve décrite dans le document EP 0 756 883. Dans cette colonne connue, la face supérieure des plateaux perforés porte des nervures qui sont disposées de manière à former des chicanes pour la circulation du brouet. Les chambres de la colonne sont reliées entre elles par des déversoirs situés à la périphérie des plateaux.

Dans l'installation selon l'invention, le volume de la chambre de détente doit être suffisant pour amener le brouet, préalablement chauffé, à la pression souhaitée.

Dans une forme de réalisation avantageuse de l'installation selon l'invention, la chambre de détente comprend une enceinte cylindrique dont la partie inférieure est reliée à la colonne (de préférence à une chambre supérieure de la colonne) et dont le ciel se trouve en communication avec le ciel de la colonne. Cette forme de réalisation de l'invention présente l'avantage d'équilibrer les pressions dans la colonne et dans la chambre de détente.

Dans une variante préférée de la forme de réalisation de l'invention, qui vient d'être décrite, l'admission du brouet dans la chambre de détente est assurée au moyen d'une conduite qui débouche tangentiellement dans l'enceinte cylindrique. Dans cette variante de l'invention, le brouet subit un déplacement circulaire dans la chambre de détente, ce qui facilite la séparation des phases liquide (le brouet) et gazeuse (le monomère vaporisé).

Le procédé et l'installation selon l'invention s'appliquent avec avantage aux brouets de polymères vinyliques, contenant un monomère vinylique résiduel de la polymérisation. Ils s'appliquent tout spécialement aux brouets de polychlorure de vinyle obtenus par la technique de polymérisation en suspension et qui contiennent du chlorure de vinyle excédentaire de la polymérisation.

Des particularités et détails de l'invention vont ressortir de la description suivante des figures du dessin annexé, qui représentent schématiquement une forme de réalisation particulière de l'installation selon l'invention.
La figure 1 est un schéma en élévation d'une forme de réalisation particulière de l'installation selon l'invention;
La figure 2 montre à grande échelle un détail de l'installation de la figure 1;
La figure 3 montre deux détails de la figure 2, en section transversale, respectivement selon les plans III_{A}-III_{A} et III_{B}-III_{B}.

Dans ces figures des mêmes numéros de référence désignant des éléments identiques.

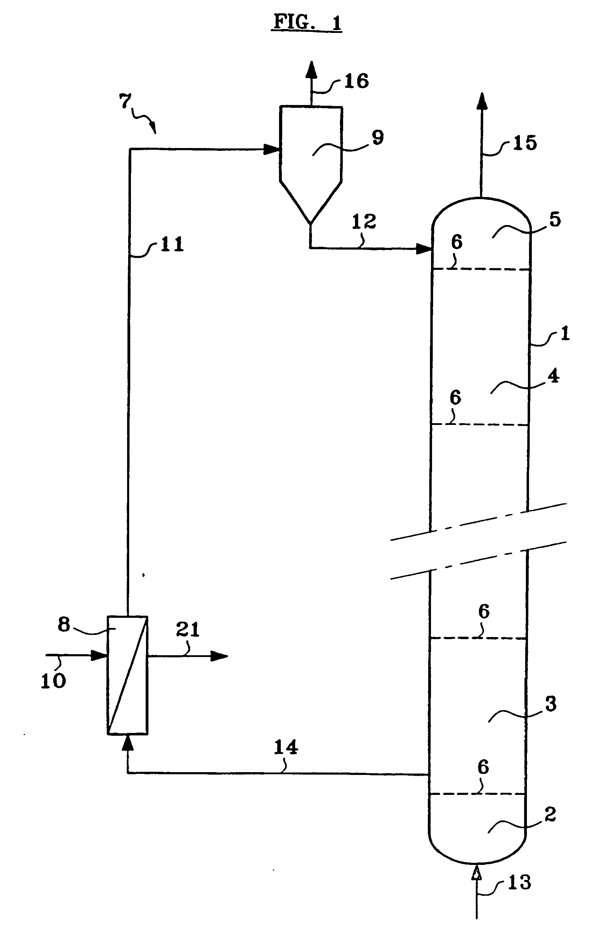

L'installation représentée à la figure 1 comprend une colonne verticale 1, divisée en une succession de chambres superposées 2, 3, ..., 4, 5, par des plateaux perforés horizontaux 6. La chambre supérieure 5 de la colonne se trouve en communication avec un dispositif d'admission d'un brouet de polychlorure de vinyle, désigné dans son ensemble par la notation de référence 7. Ce dispositif d'admission comprend un réchauffeur 8, une chambre de détente 9, une conduite d'admission 10 d'un brouet dans le réchauffeur, une conduite de jonction 11 entre le réchauffeur 8 et le chambre de détente 9 et une conduite de jonction 12 entre la chambre de détente 9 et la chambre supérieure 5 de la colonne 1. Une conduite d'admission de vapeur 13 débouche dans la chambre inférieure 2 de la colonne 1 et une conduite 14 joint le réchauffeur 8 à la chambre 3. Des évents 15 et 16 sont prévus respectivement au sommet de la colonne 1 et au sommet de la chambre de détente 9.

Des détails concernant la colonne 1 et son fonctionnement sont accessibles dans le document EP 0 756 883 A2.

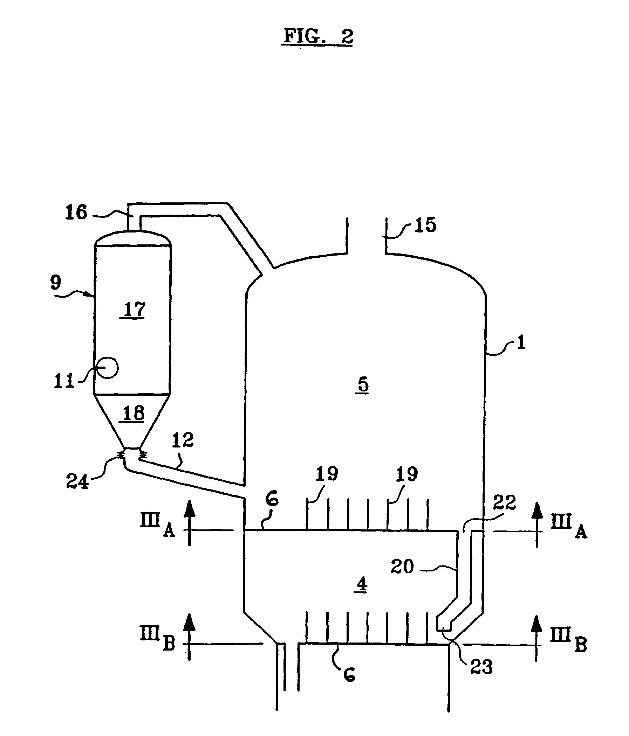

La chambre de détente 9, visible à plus grande échelle à la figure 2, comprend un corps cylindrique vertical 17, prolongé vers le bas par un corps tronconique 18. La conduite 11 (servant à l'introduction du brouet dans la chambre de détente 9) débouche dans le corps cylindrique 17, tangentiellement à sa paroi. La conduite 12 débouche dans le fond du corps tronconique 18 et dans la partie inférieure de la chambre 5 de la colonne 1. La jonction de la conduite 12 au corps tronconique 18 comprend un joint de dilatation 24. L'évent 16 est par ailleurs relié au ciel de la chambre supérieure 5 de la colonne 1, de manière à équilibrer les pressions dans la colonne 1 et dans la chambre de détente 9.

L'installation des figures 1 et 2 est spécialement adaptée au traitement des brouets de polychlorure de vinyle obtenus par la technique de polymérisation en suspension. Ces brouets sont contaminés par du chlorure de vinyle résiduel de la polymérisation. Dans cette application particulière de l'installation, le brouet de polychlorure de vinyle provenant de la polymérisation est introduit dans le réchauffeur 8 par la conduite d'admission 10. Dans le réchauffeur 8, le brouet est chauffé à une température d'environ 100 °C, ce qui a pour effet de vaporiser une fraction du chlorure de vinyle monomère qu'il contient et de faire monter la pression. Le brouet chaud et sous pression est transféré du réchauffeur 8 dans la chambre de détente 9 par le conduit 11. A son entrée dans la chambre 9, le brouet subit une détente, libérant une phase gazeuse contenant du chlorure de vinyle. La chambre de détente fonctionne à la manière d'un cyclone, le brouet y étant soumis à une circulation circulaire qui facilite et accélère la séparation des phases gazeuse et liquide. La phase liquide tombe dans le fond du corps tronconique 18, d'où elle passe dans la chambre supérieure 5 de la colonne 1, via la conduite de jonction 12. La phase gazeuse s'échappe dans le haut du corps cylindrique 17 par l'évent 16 et pénètre dans le ciel de la chambre supérieure 5 de la colonne 1.

Dans la chambre supérieure 5 de la colonne, le brouet tombe sur le plateau 6, où il circule dans des chicanes formées par un réseau de nervures 19, avant d'atteindre un déversoir 20 dans lequel il tombe pour atteindre le plateau 6 de la chambre sous-jacente 4 de la colonne. Le brouet descend de la sorte progressivement dans la colonne 1, jusqu'à la chambre 3. Pendant qu'il circule de haut en bas dans la colonne 1, le brouet est soumis à un balayage par un courant ascendant de vapeur d'eau qui est introduit dans le fond de la colonne par la conduite 13. Le balayage du brouet par le courant de vapeur a pour résultat d'extraire le chlorure de vinyle présent dans le brouet et de l'entraîner jusqu'au sommet de la colonne. La vapeur d'eau chargée de chlorure de vinyle est évacuée du ciel de la colonne 1 par l'évent 15. Le brouet qui parvient dans la chambre 3 est sensiblement exempt de chlorure de vinyle et il est chaud. Il est évacué de la colonne 1 par la conduite de soutirage 14 et est introduit dans le réchauffeur 8 où sa chaleur sensible est utilisée pour chauffer le brouet qui y pénètre par la conduite 10. Le brouet refroidi dans le réchauffeur 8 sort de ce dernier par une conduite d'extraction 21.

Des détails concernant la circulation et le traitement du brouet dans la colonne 1 sont accessibles dans le document EP 0 756 883 A2.

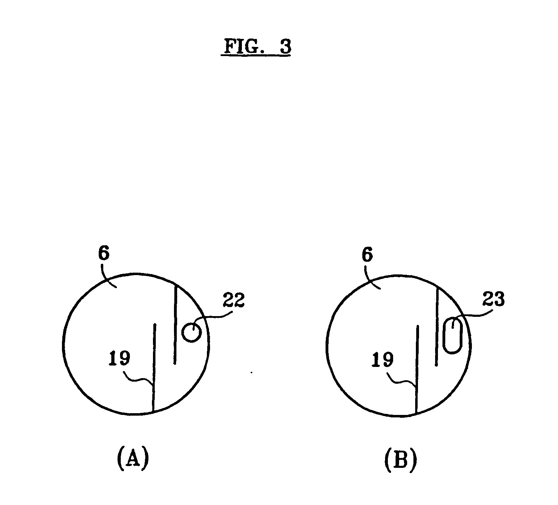

La figure 3 montre un détail constructif d'une variante de réalisation avantageuse de l'installation des figures 1 et 2. Dans cette variante de l'invention, le déversoir 20 reliant deux chambres successives 5 et 4 de la colonne comprend un tube dont la partie supérieure 22 traverse le plateau perforé séparant les chambres 4 et 5 et dont la partie inférieure 23 débouche à proximité du plateau perforé inférieur de la chambre 4. La section transversale de la partie supérieure 22 est sensiblement circulaire, tandis que la section transversale de la partie inférieure 23 est allongée. Par ailleurs la section transversale de la partie inférieure 23 est plus grande que celle de la partie 22, de manière à compenser la perte de charge subie par le brouet dans le tube 20. Le rapport entre ces deux sections transversales est par exemple comprise entre 1,5 et 3. La variante de réalisation selon la figure 3 présente l'avantage d'uniformiser la vitesse de circulation du brouet dans la colonne.

## Revendications

1. Procédé pour extraire un monomère d'un brouet aqueux d'un polymère, selon lequel on chauffe le brouet, puis on l'introduit dans une colonne où on le soumet à un balayage avec un courant ascendant de gaz inerte chimiquement vis-à-vis du polymère, **caractérisé en ce qu'**après avoir chauffé le brouet et avant de l'introduire dans la colonne, on le soumet à une détente en baissant la pression de la phase gazeuse qui se trouve en contact avec le brouet jusqu'à une valeur voisine de, et de préférence égale à, celle régnant dans la colonne à l'endroit de l'introduction du brouet.

2. Procédé selon la revendication 1, **caractérisé en ce que** le gaz inerte comprend de la vapeur d'eau.

3. Procédé selon la revendication 1 ou 2, **caractérisé en ce que** le polymère comprend un polymère vinylique et le monomère comprend un monomère vinylique.

4. Procédé selon la revendication 3, **caractérisé en ce que** le brouet de polymère vinylique est obtenu par polymérisation du monomère vinylique en suspension.

5. Procédé selon la revendication 3 ou 4, **caractérisé en ce qu'**on chauffe le brouet à une température de 80 à 110 °C,

6. Installation pour extraire un monomère d'un brouet d'un polymère selon le procédé selon la revendication 1, comprenant une colonne verticale (1), divisée en plusieurs chambres superposées (2 à 5) par des plateaux perforés (6), un dispositif d'admission du brouet (7) dans au moins l'une des chambres, au-dessus d'un plateau perforé et une conduite d'admission d'un gaz inerte (13) dans le fond de la colonne, **caractérisée en ce que** le dispositif d'admission du brouet (7) dans la colonne comprend une chambre de détente (9), en amont de la colonne.

7. Installation selon la revendication 6, **caractérisée en ce que** la chambre de détente comprend une enceinte cylindrique (17) dont la partie inférieure est reliée à une chambre supérieure de la colonne et dont le ciel se trouve en communication avec le ciel de la colonne.

8. Installation selon la revendication 7, **caractérisée en ce qu'**une conduite (11) d'admission du brouet dans la chambre de détente débouche tangentiellement dans l'enceinte cylindrique (17) de celle-ci.

9. Installation selon l'une quelconque des revendications 6 à 8, **caractérisée en ce qu'**un déversoir (20) du brouet d'une chambre de la colonne dans la chambre immédiatement sous-jacente de la colonne comprend un tube dont la partie supérieure (22) traverse le plateau séparant lesdites chambres de la colonne et dont la partie inférieure (23) débouche au-dessus du plateau situé sous ladite chambre sous-jacente, et **en ce que** la section transversale de la partie inférieure susdite (23) du tube est plus grande que la section transversale de la partie supérieure (22) dudit tube.

10. Installation selon la revendication 9, **caractérisée en ce que** le rapport entre les deux sections transversales précitées du tube est compris entre 1,5 et 3.

## Claims

1. Process for extracting a monomer from an aqueous broth of a polymer, in which the broth is heated and is then introduced into a column in which it is flushed with an ascending stream of gas chemically inert with respect to the polymer, **characterized in that**, after the broth has been heated and before it has been introduced into the column, it is subjected to a depressurization by reducing the pressure of the gaseous phase which is in contact with the broth to a value close to, and preferably equal to, that prevailing in the column at the point at which the broth is introduced.

2. Process according to Claim 1, **characterized in that** the inert gas comprises steam.

3. Process according to Claim 1 or 2, **characterized in that** the polymer comprises a vinyl polymer and the monomer comprises a vinyl monomer.

4. Process according to Claim 3, **characterized in that** the vinyl polymer broth is obtained by polymerization of the vinyl monomer in suspension.

5. Process according to Claim 3 or 4, **characterized in that** the broth is heated to a temperature of from 80°C to 110°C.

6. Installation for extracting a monomer from a broth of a polymer according the process according to Claim 1, comprising a vertical column (1), divided into several chambers (2 to 5) on which are superimposed perforated platforms (6), a device for introducing the broth (7) into at least one of the chambers, above a perforated platform, and a pipe for introducing an inert gas (13) into the bottom of the column, **characterized in that** the device for introducing the broth (7) into the column comprises a depressurization chamber (9), upstream of the column.

7. Installation according to Claim 6, **characterized in that** the depressurization chamber comprises a cylindrical enclosure (17), the bottom of which is connected to a top chamber of the column, and the headspace of which is in communication with the headspace of the column.

8. Installation according to Claim 7, **characterized in that** a pipe (11) for introducing the broth into the depressurization chamber opens tangentially into the cylindrical enclosure (17) of this chamber.

9. Installation according to any one of Claims 6 to 8, **characterized in that** an overspill (20) of the broth from one chamber of the column into the immediately subjacent chamber of the column comprises a tube, the top (22) of which passes through the plate separating the said chambers of the column, and the bottom (23) of which opens above the plate below the said subjacent chamber, and **in that** the cross section of the bottom (23) of the said tube is larger than the cross section of the top (22) of the said tube.

10. Installation according to Claim 9, **characterized in that** the ratio between the two abovementioned cross sections of the tube is between 1.5 and 3.

## Patentansprüche

1. Verfahren zum Extrahieren eines Monomers aus einer wässrigen Brühe eines Polymers, nach welchem die Brühe erwärmt wird, dann in eine Kolonne eingeführt wird, in welcher sie mit einem aufsteigenden Strom eines gegenüber dem Polymer chemisch inerten Gases einer Spülung unterzogen wird, **dadurch gekennzeichnet, dass** die Brühe nach dem Erwärmen und vor dem Einführen in die Kolonne einer Entspannung unterzogen wird, indem der Druck der sich mit der Brühe in Kontakt befindlichen Gasphase auf einen Wert in der Nähe von und bevorzugt gleich jenem, welcher in der Kolonne am Eintrittsort der Brühe herrscht, abgesenkt wird.

2. Verfahren nach Anspruch 1, **dadurch gekennzeichnet, dass** das inerte Gas Wasserdampf umfasst.

3. Verfahren nach einem der Ansprüche 1 oder 2, **dadurch gekennzeichnet, dass** das Polymer ein Vinylpolymer umfasst und das Monomer ein Vinylmonomer umfasst.

4. Verfahren nach Anspruch 3, **dadurch gekennzeichnet, dass** die Brühe des Vinylpolymers durch Suspensionspolymerisation des Vinylmonomers erhalten wird.

5. Verfahren nach einem der Ansprüche 3 oder 4, **dadurch gekennzeichnet, dass** die Brüche auf eine Temperatur von 80 bis 110°C erwärmt wird.

6. Vorrichtung zum Extrahieren eines Monomers aus einer Brühe eines Polymers nach dem Verfahren nach Anspruch 1, umfassend eine senkrechte Kolonne (1), welche mit perforierten Böden (6) in mehrere übereinanderliegende Kammern (2 bis 5) unterteilt ist, eine Zuführvorrichtung für Brühe (7) in wenigstens eine der Kammern oberhalb eines perforierten Bodens, und eine Zuführleitung für Inertgas (13) im Boden der Kolonne, **dadurch gekennzeichnet, dass** die Zuführvorrichtung für Brühe (7) in die Kolonne eine der Kolonne vorgelagerte Entspannungskammer (9) umfasst.

7. Vorrichtung nach Anspruch 6, **dadurch gekennzeichnet, dass** die Entspannungskammer eine zylindrische Einfassung (17) umfasst, deren unterer Teil mit einer obersten Kammer der Kolonne verbunden ist und deren Dach mit dem Dach der Kolonne verbunden ist.

8. Vorrichtung nach Anspruch 7, **dadurch gekennzeichnet, dass** eine Zuführleitung (11) für Brühe in die Entspannungskammer tangential in deren zylindrische Einfassung (17) einmündet.

9. Vorrichtung nach einem der Ansprüche 6 bis 8, **dadurch gekennzeichnet, dass** ein Überlauf (20) der Brühe einer Kammer der Kolonne in die unmittelbar darunter liegende Kammer der Kolonne ein Rohr umfasst, dessen oberer Teil (22) durch den, die bezeichneten Kammern der Kolonne trennenden, Boden verläuft, und dessen unterer Teil (23) oberhalb des Bodens, der sich unter der vorstehend genannten darunterliegenden Kammer befindet, einmündet, und dass der Querschnitt des vorstehend genannten unteren Teils (23) des Rohres größer ist als der Querschnitt des oberen Teils (22) des besagten Rohres.

10. Vorrichtung nach Anspruch 9, **dadurch gekennzeichnet, dass** das Verhältnis der zwei vorstehend genannten Querschnitte des Rohres von 1,5 bis 3 beträgt.
